(19) Europäisches Patentamt
European Patent Office
Office européen des brevets

(11) EP 4 796 571 A1

(12) EUROPEAN PATENT APPLICATION

(43) Date of publication:
**26.08.2026 Bulletin 2026/35**

(21) Application number: **26158639.0**

(22) Date of filing: **13.02.2026**

(51) International Patent Classification (IPC):
***C08F 297/04*** *(2006.01)* ***C08F 236/10*** *(2006.01)*
*B60C 1/00 (2006.01)* *C08L 9/06 (2006.01)*
*C08L 53/02 (2006.01)* *C08C 19/25 (2006.01)*

(52) Cooperative Patent Classification (CPC):
**C08F 297/04; B60C 1/0016; C08C 19/25;**
**C08F 236/10;** C08L 9/06; C08L 53/02; C08L 53/025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.02.2025 US 202563760958 P**

(71) Applicant: **TSRC Corporation**
**Kaohsiung City**
**815 (TW)**

(72) Inventors:
- **Chen, Chun-Lin**
**830070 Kaohsiung City (TW)**
- **Lee, Yun-Ta**
**825604 Kaohsiung City (TW)**
- **Tsai, Siang-Lin**
**804424 Kaohsiung City (TW)**
- **Hu, Nai-Hao**
**403010 Taichung City (TW)**
- **Lu, Qiwei**
**Sugar Land, 77479 (US)**

(74) Representative: **Bandpay & Greuter**
**11 rue Christophe Colomb**
**75008 Paris (FR)**

# (54) CONJUGATED DIENE - VINYL AROMATIC HYDROCARBON COPOLYMER AND METHOD THEREOF

(57) The present invention provides a copolymer of a conjugated diene and a vinyl aromatic hydrocarbon, and a method for preparing the same. The copolymer of the present invention comprises a homopolymeric segment composed of the conjugated diene, and a copolymeric segment composed of the conjugated diene and the vinyl aromatic hydrocarbon and connected to the homopolymeric segment. The copolymer has a first glass transition temperature between -10 °C and -50 °C and a second glass transition temperature between -45°C and -85°C, the first glass transition temperature is higher than the second glass transition temperature and the content of vinyl aromatic hydrocarbon microblocks is 1.0% to 10.0% based on the total content of the vinyl aromatic hydrocarbon in the copolymer, wherein the vinyl aromatic hydrocarbon microblocks refer to those having at least four consecutive vinyl aromatic hydrocarbon units.



Processed by Luminess, 75001 PARIS (FR)

## Description

FIELD OF INVENTION

The present invention relates to a conjugated diene-vinyl aromatic hydrocarbon copolymer, particularly a conjugated diene-vinyl aromatic hydrocarbon copolymer containing a homopolymeric segment and a copolymeric segment, and a method for preparing the same.

BACKGROUND OF THE DISCLOSURE

Solution Polymerized Styrene-Butadiene Rubber (SSBR) is a copolymer rubber material formed by the polymerization of styrene and butadiene in organic solvents. Compared to emulsion-polymerized SBR, SSBR typically offers better controllability over molecular structures, such as the adjustment of styrene content and butadiene microstructure. This allows for the further tuning of the material's glass transition temperature (Tg) and viscoelastic behavior, thereby improving dynamic mechanical properties. Based on these characteristics, SSBR is commonly used in tire-related applications, particularly in the formulation design of tire tread rubber.

In recent years, the development of high-performance tire tread rubber has required the simultaneous optimization of low rolling resistance (to reduce energy loss and improve fuel efficiency) and wet grip (to enhance braking and handling safety on wet roads), while maintaining good wear resistance. Prior art such as US4843120, JP2008231197A, and CN103958600B disclose SSBRs claiming various benefits. However, several issues remain to be improved in practical applications.

SUMMARY OF THE DISCLOSURE

The problem to be solved

The technical problem to be solved by the present invention is that, in response to the demands for energy saving and driving safety, a tire tread rubber material should simultaneously achieve (i) improved wet grip performance to improve braking and handling stability on wet and slippery road surfaces, (ii) reduced rolling resistance to reduce energy loss and improve fuel efficiency, and (iii) maintained sufficient wear resistance to extend service life. However, existing conjugated diene-vinyl aromatic hydrocarbon copolymers, in terms of formulation or structural design, are often difficult to simultaneously satisfy the above multiple performance requirements, resulting in insufficient performance balance. Therefore, the present invention provides an improved conjugated diene-vinyl aromatic hydrocarbon copolymer, so as to achieve better overall performance among wet grip performance, wear resistance, and low rolling resistance.

Solution to the Problem

In one aspect, in order to enhance the wet grip performance of a tire tread rubber, the inventors of the present application have carefully designed a conjugated diene-vinyl aromatic hydrocarbon copolymer having dual glass transition temperatures (dual Tg), and the copolymer comprises vinyl aromatic hydrocarbon microblocks, so as to significantly enhance wet grip performance through such specific structural configuration. In another aspect, the inventors of the present application further set and control the proportion of the vinyl aromatic hydrocarbon microblocks (S.B.%) within a range of 1.0% to 10.0%, such that the copolymer, while improving wet grip performance, can still maintain good rolling resistance performance. In yet another aspect, for a conjugated diene-vinyl aromatic hydrocarbon copolymer having a modified terminal, the modified terminal is directly connected to the copolymer segment rather than the homopolymer segment, which is more favorable for forming the dual Tg characteristics.

The present invention further includes other aspects and various embodiments to solve other problems. In combination with the above aspects, such other aspects are disclosed in detail in the embodiments.

DETAILED DESCRIPTION OF EXEMPLARY EMBODIMENTS

In order to enable the present invention and the claimed scope of the patent application to be fully understood, preferred embodiments of the present invention will be illustrated below. To avoid obscuring the content of the present invention, the following description omits well-known components, related materials, and related processing techniques thereof.

Analytical Methods

Vinyl Aromatic Hydrocarbon Microblock Content: The vinyl aromatic hydrocarbon microblocks as referred to in the present invention are defined as microblocks having at least four consecutive vinyl aromatic hydrocarbon units. The analytical method is exemplified by using styrene: 20 mg of a sample is dissolved in 2.0 mL of $CDCl_3$, and a $^1H$ NMR scan is performed using a Bruker 500 MHz NMR instrument; in the $^1H$ NMR spectrum, an integral value in 6.2-7.0 ppm is defined as a, and a value obtained by subtracting an integral of $CDCl_3$ from an integral value in 7.0-7.8 ppm is defined as b, then the styrene microblock content of the copolymer to which the sample belongs, based on the total styrene content, is calculated as $[a/(a+b)] \times 100\%$.

Rolling Resistance (R.R.): The loss tangent tanδ at 60°C is used as an index to evaluate the rolling resistance (Rolling Resistance, R.R.) of the copolymer rubber compound after being made into rubber (tread rubber). The test uses a TA Instruments ARES-G2 rheometer to measure the storage modulus G' and the loss modulus G" of a test specimen under strain sweep conditions, and a tanδ value is calculated according to tanδ = G"/G'. During the scan, the sample temperature is 60°C, the strain sweep range is 0.1% to 10%, and the tanδ value at 5.0% strain is taken.

Wet Grip (W.G.): The loss tangent tanδ at 0°C is used as an index to evaluate the wet grip performance (Wet Grip, W.G.) of the copolymer rubber compound after being made into rubber (tread rubber). The test uses a TA Instruments ARES-G2 rheometer to measure the storage modulus G' and the loss modulus G" of a test specimen under strain sweep conditions, and a tanδ value is calculated according to tanδ = G"/G'. During the scan, the sample temperature is 0°C, the strain sweep range is 0.1% to 10%, and the tanδ value at 5.0% strain is taken as an index for evaluating wet grip performance.

Abrasion Test (DIN): Measurement is performed using a GT-7012-DN model in accordance with ASTM D5963.

Glass Transition Temperature (Tg, °C): Main Method: Tg measurement is performed using Dynamic Mechanical Analysis (DMA). A cut strip neat polymer sample is tested in accordance with ASTM E1640, and a rheometer (manufactured by TA Instruments, trade name "RSA-G2") is used to determine the glass transition temperature. During the test, an air cooling system (manufactured by TA Instruments, trade name "ACS-3") is used, and under a condition that nitrogen gas flows at 50 mL/min, the temperature is increased from -85°C at 2°C/min, while changes in the storage modulus E' and the loss modulus E" are recorded. The peak temperature of the loss tangent tanδ (tanδ = E"/E') is taken as Tg. Special Note: The embodiments and comparative examples of the present invention all determine the glass transition temperature by this method, and this method is the preferred method. However, if the two glass transition temperatures are too close to be clearly identified by this method, the following secondary method may be used.

Glass Transition Temperature (Tg, °C): Secondary Method: Measurement is performed using a Differential Scanning Calorimetry (DSC) (model Q200, TA Instruments) with reference to ASTM E1356. The specific test conditions are as follows: under an environment of nitrogen gas flow at 50 mL/min, at a heating rate of 20°C/min, the temperature is raised from -90°C to 100°C and a heat flow curve is recorded. The glass transition temperature (Tg) is defined as a characteristic peak corresponding to a peak of a first derivative of the heat flow curve with respect to temperature. By analyzing characteristic peak of the first-derivative curve, glass transition points with relatively weak signal intensity in the original heat flow curve can be effectively identified, thereby determining the glass transition temperature of the material in a multiphase structure.

Bound vinyl aromatic hydrocarbon content of the Copolymer and Vinyl Content of the Copolymer: With reference to the related measurement method described in Chinese patent CN103476815B, the NMR is a Bruker AV-500 model (500 MHz), the probe is a 5 mm dual probe equipped with an automatic frequency tuning device, the NMR operating software is TOPSPIN, and the solvent used is deuterated chloroform/tetramethylsilane ($CDCl_3$/TMS).

Copolymer of a Conjugated Diene and a Vinyl Aromatic Hydrocarbon

The present invention provides a copolymer of a conjugated diene and a vinyl aromatic hydrocarbon, which comprises: a homopolymeric segment composed of a conjugated diene, and a copolymeric segment composed of a conjugated diene and a vinyl aromatic hydrocarbon; wherein the copolymeric segment is connected to the homopolymeric segment. The copolymer has two glass transition temperatures (Tg), a first glass transition temperature falling between -10°C and -50°C and a second glass transition temperature falling between -45°C and -85°C, wherein the first glass transition temperature is higher than the second glass transition temperature; and the content of vinyl aromatic hydrocarbon microblocks in the copolymer is 1.0% to 10.0% based on the total content of the vinyl aromatic hydrocarbon in the copolymer. In a preferred embodiment, the first glass transition temperature falls between -12°C and -40°C, and the second glass transition temperature falls between -50°C and -60°C. In a preferred embodiment, the content of vinyl aromatic hydrocarbon microblocks in the copolymer is 1.0% to 8.0% based on the total content of the vinyl aromatic hydrocarbon in the copolymer. In a preferred embodiment, the content of the conjugated diene in the homopolymeric

segment is 60 wt% or more based on the total content of the copolymer, preferably 60 wt% to 90 wt%, and more preferably 65 wt% to 73 wt%. In a preferred embodiment, the bound vinyl aromatic hydrocarbon content of the copolymer is 10 wt% to 20 wt%, preferably 12 wt% to 16 wt%. In a preferred embodiment, the vinyl content of the copolymer (based on the total content of the conjugated diene) is 30 wt% to 40 wt%, preferably 31 wt% to 36 wt%. In a preferred embodiment, the copolymer does not have other glass transition temperatures in addition to the first and second glass transition temperatures described above. In a preferred embodiment, the copolymer further has a modified terminal, and the modified terminal is connected to the copolymeric segment, such that the copolymeric segment is disposed between the homopolymeric segment and the modified terminal. In a preferred embodiment, the modified terminal contains silicon. In a preferred embodiment, the copolymer is non-hydrogenated.

The conjugated diene monomer applicable to the present invention is a conjugated diene having 4 to 12 carbon atoms, and specific examples include 1,3-butadiene, 1,3-pentadiene, 1,3-hexadiene, 1,3-heptadiene, 2-methyl-1,3-butadiene (isoprene), 2-methyl-1,3-pentadiene, 2-hexyl-1,3-butadiene, 2-phenyl-1,3-butadiene, 2-phenyl-1,3-pentadiene, 2-p-tolyl-1,3-butadiene, 2-benzyl-1,3-butadiene, 3-methyl-1,3-pentadiene, 3-methyl-1,3-hexadiene, 3-butyl-1,3-octadiene, 3-phenyl-1,3-pentadiene, 4-methyl-1,3-pentadiene, 1,4-diphenyl-1,3-butadiene, 2,3-dimethyl-1,3-butadiene, 2,3-dimethyl-1,3-pentadiene, 2,3-dibenzyl-1,3-butadiene, 4,5-diethyl-1,3-octadiene, myrcene, and any combination of the above, wherein 1,3-butadiene is a preferred choice. The butadiene referred to herein all refers to 1,3-butadiene.

Specific examples of the vinyl aromatic hydrocarbon monomer applicable to the present invention include styrene, methylstyrene and all isomers thereof, ethylstyrene and all isomers thereof, tert-butylstyrene and all isomers thereof, dimethylstyrene and all isomers thereof, methoxystyrene and all isomers thereof, cyclohexylstyrene and all isomers thereof, vinyl biphenyl, 1-vinyl-5-hexylnaphthalene, vinylnaphthalene, vinyl anthracene, 2,4-diisopropylstyrene, 5-tert-butyl-2-methylstyrene, divinylbenzene, trivinylbenzene, divinylnaphthalene, tert-butoxystyrene, 4-propylstyrene, 4-dodecylstyrene, 2-ethyl-4-benzylstyrene, 4-(phenylbutyl)styrene, N-4-vinylphenyl-N,N-dimethylamine, (4-vinylphenyl) dimethylaminoethyl ether, N,N-dimethylaminomethylstyrene, N,N-dimethylaminoethylstyrene, N,N-diethylaminomethylstyrene, N,N-diethylaminoethylstyrene, vinylxylene, vinylpyridine, diphenylethylene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, indene, diphenylethylene containing a tertiary amino group, such as 1-(4-N,N-dimethylaminophenyl)-1-phenylethylene, and any combination of the above, wherein styrene is a preferred choice.

The modifier used for the modified terminal applicable to the present invention is preferably an organosilane compound. The preferred organosilane compound comprises a compound represented by the following Formula 1:

Formula 1

$$R^2O-\underset{\displaystyle R^4}{\overset{\displaystyle OR^1}{\underset{|}{\overset{|}{Si}}}}-R^3-Y$$

$R^1$ and $R^2$ are C1-C12 alkyl, C6-C18 aromatic group, or allyl group; $R^3$ is C1-C12 alkyl or C6-C18 aromatic group; $R^4$ is C1-C12 alkoxy, C1-C12 alkyl, C6-C18 aromatic group, or allyl group; and Y is a functional group containing an O and/or N atom and/or a P atom, preferably Y is an epoxyalkyl group, a tertiary amino group, a secondary or primary amine group, an ester group, an aldehyde group, a ketone group, an acrylic acid group, an acrylate group, an imidazoline group, a morpholine group, or any combination of the above. Preferred organosilane compounds are 4-{3-[dimethoxy(methyl)silyl] propyl}morpholine, 3-(trimethoxysilyl)-N,N-dimethylpropan-1-amine, or diethyl[2-(triethoxysilyl)ethyl]phosphonate.

Process for Preparing a Conjugated Diene-Vinyl Aromatic Hydrocarbon Copolymer

The copolymer of the present invention may be produced by various suitable methods. In a preferred embodiment, the production method of the present invention comprises: step (1) providing an initiator; step (2) under conditions in the presence of a cyclic ether and a diether compound, polymerizing by an anionic polymerization using the initiator to form a homopolymeric segment composed of the conjugated diene; and step (3) after step (2), forming a copolymeric segment composed of the conjugated diene and the vinyl aromatic hydrocarbon and connected to the homopolymeric segment, wherein in step (3) the vinyl aromatic hydrocarbon and the conjugated diene are simultaneously added to a polymerization reactor, and an addition rate of the vinyl aromatic hydrocarbon is different from an addition rate of the conjugated diene. In a preferred embodiment, the method further comprises: step (4) after step (3), forming a modified terminal connected to the copolymeric segment, wherein the copolymeric segment is located between the homopolymeric segment and the

modified terminal.

Initiator

The term "anionic polymerization" refers to a polymerization method in which an initiator forms an active carbon anion, and after a monomer is added, an addition polymerization reaction occurs between the monomer and the active carbon anion to form a polymer having a molecular chain end carrying a negative charge. In a preferred embodiment, the present invention uses an organoalkali metal as an initiator for the anionic polymerization. In a preferred embodiment, the present invention uses a multifunctional initiator as an initiator for the anionic polymerization. In a preferred embodiment, the multifunctional initiator is obtained by reacting a divinylarene compound with an organoalkali metal.

Preferred divinylarene compounds include compounds represented by the following Formula (2):

Formula (2)

A
Q
B

A and B are $C_nH_{2n+1}$ or an aromatic ring, and n is 0 to 5; A and B may be the same as or different from each other; and Q is an aromatic ring. In the divinylarene compound, substituents A, B and/or Q may be aromatic rings, including substituted or unsubstituted monocyclic, polycyclic, or fused polycyclic rings, for example, independently selected from the group consisting of : substituted or unsubstituted benzene, naphthalene, anthracene, phenanthrene, fluorene, tetracene, pyrene, biphenyl, terphenyl, quaterphenyl, chrysene, triphenylene, perylene, indene, and any combination or fused rings combination thereof. Preferably, the aromatic ring is benzene. The divinylarene compound may, for example, be independently selected from the group consisting of m-divinylbenzene, p-divinylbenzene, 1,2-diisopropenylbenzene, 1,3-diisopropenylbenzene, 1,4-diisopropenylbenzene, 1,3-divinylnaphthalene, 1,8-divinylnaphthalene, 1,4-divinylnaphthalene, 1,5-divinylnaphthalene, 2,3-divinylnaphthalene, 2,7-divinylnaphthalene, 2,6-vinylnaphthalene, 4,4'-divinylbiphenyl, 4,3'-divinylbiphenyl, 4,2'-divinylbiphenyl, 3,2'-divinylbiphenyl, 3,3'-divinylbiphenyl, 2,2'- divinylbiphenyl, 2,4-divinylbiphenyl, 1,2-divinyl-3,4-dimethylbenzene, 1,3-divinyl-4,5,8-tributylnaphthalene, 2,2 ' -divinyl-4-ethyl-4'-propylbiphenyl, and any combination thereof. Preferably, the divinylarene compound is 1,3-diisopropenylbenzene (as used herein, " diisopropenylbenzene " refers to 1,3-diisopropenylbenzene).

Specific examples of the organoalkali metal include monoorganic lithium compounds such as methyllithium, ethyllithium, n-propyllithium, isopropyllithium, n-butyllithium, sec-butyllithium, tert-butyllithium, isobutyllithium, n-pentyllithium, n-hexyllithium, benzyllithium, phenyllithium, tolyllithium and all isomers thereof, naphthyllithium, stilbenelithium, and the like. These polymerization initiators may be used alone or in a combination of two or more, and lithium compounds are preferred. Preferably, the organolithium compound is n-butyllithium.

In order to adjust the vinyl content of the copolymer, a polar modifier for improving solvent polarity is preferably added during the reaction. In a specific example, a cyclic ether compound and/or a diether compound may be added. The cyclic ether compound may be a monocyclic ether compound or a bicyclic ether compound. For example, the monocyclic ether compound may be independently selected from the group consisting of tetrahydrofuran, furan, tetrahydropyran, 2-methyltetrahydropyran, 3-methyltetrahydropyran, crown ethers (e.g., 12-crown-4 ether, 15-crown-5 ether, or 18-crown-6 ether), 1,4-dioxane, and any combination thereof; the bicyclic ether compound may be 2,2-bis(2-tetrahydrofuranyl) propane. The diether compound may be independently selected from the group consisting of diethyl ether, di-n-propyl ether, di-n-butyl ether, ethylene glycol dibutyl ether, ethylene glycol diethyl ether, ethylene glycol dimethyl ether, diethylene glycol dibutyl ether, diethylene glycol diethyl ether, diethylene glycol dimethyl ether, methyl n-propyl ether, diisopropyl ether, tert-amyl ethyl ether, methyl tert-butyl ether, ethyl tert-butyl ether, and any combination thereof. Among these, tetrahydrofuran and ethylene glycol diethyl ether are preferred.

Formation of the Copolymeric Segment

In step (3), the distribution of vinyl aromatic hydrocarbon microblocks within the copolymeric segment may be adjusted by controlling a difference in the monomer addition rates. In order to achieve a balance among properties of the rubber composition, such as DIN abrasion, rolling resistance (R.R.), and wet grip (W.G.), a preferred distribution of the vinyl aromatic hydrocarbon microblocks is such that the content of the vinyl aromatic hydrocarbon microblocks accounts for 1.0% to 10.0% of a total vinyl aromatic hydrocarbon content of the copolymer. Specifically, when forming the copolymeric

segment, the vinyl aromatic hydrocarbon and the conjugated diene are simultaneously added to a polymerization reactor, and an addition rate of the vinyl aromatic hydrocarbon is different from an addition rate of the conjugated diene. For example, in terms of mass flow rate, the addition rate of the vinyl aromatic hydrocarbon may be controlled at 70 g/min, and the addition rate of the conjugated diene may be controlled at 11 to 18 g/min, such that a ratio of the addition rates therebetween (vinyl aromatic hydrocarbon/conjugated diene) is controlled at 3.8 to 6.4, thereby achieving the above control of the vinyl aromatic hydrocarbon microblock distribution.

Applications of the Conjugated Diene-Vinyl Aromatic Hydrocarbon Copolymer

The conjugated diene-vinyl aromatic hydrocarbon copolymer of the present invention may be mixed with other components to obtain a rubber composition. Specific examples of the other components include natural rubber, other conjugated diene polymers different from the copolymer of the present invention, an ethylenepropylene copolymer, and an ethylene-octene copolymer. In addition, the rubber composition may further comprise additives. Specific examples of the additives include vulcanizing agents such as sulfur powder; vulcanization accelerators such as sulfenamide-based vulcanization accelerators and a diphenylguanidine (DPG) secondary accelerator; vulcanization activators such as stearic acid or zinc oxide; reinforcing agents such as silica or carbon black; fillers such as calcium carbonate or talc; silane coupling agents; extender oils; processing aids; antioxidants; and lubricants.

The rubber composition of the present invention may be compounded using, for example, a conventional mixer, such as rolls, a Banbury mixer, or an internal mixer, to knead the respective components. As for compounding conditions, when mixing additives, fillers, silica and/or other reinforcing agents other than a vulcanizing agent or a vulcanization accelerator, the compounding temperature is generally 50°C to 200°C, preferably 80°C to 150°C. When mixing with a vulcanizing agent or a vulcanization accelerator, the compounding temperature is generally not higher than 100°C, preferably from room temperature to 90°C.

The conjugated diene-vinyl aromatic hydrocarbon copolymer of the present invention and the rubber composition thereof may be used in applications such as tires, shoe soles, flooring materials, and vibration-damping materials, and are particularly suitable for tires. When applied to a tire tread, they can reduce rolling resistance and improve wet-skid performance, thereby enhancing handling stability and reliability on wet roads, enabling the tire to achieve a better balance among wet grip, abrasion resistance, and rolling resistance, and further contributing to improved fuel efficiency.

Various Examples of the Conjugated Diene-Vinyl Aromatic Hydrocarbon Copolymer

Example 1: Into a 5525 g cyclohexane solution containing 8.3 g of a cyclic ether and 0.5 g of a diether compound, 4.9 mmol of n-butyllithium and 1 g of diisopropenylbenzene were added, followed by mixing and reaction at 50°C for 30 minutes. Thereafter, 1,3-butadiene (in an amount of 65 wt% based on the total copolymer) was added to carry out a first-stage polymerization, and after reaching a maximum temperature of the first stage, the reaction was maintained at that temperature for 10 minutes. Next, the remaining butadiene and styrene (together in an amount of 35 wt% based on the total copolymer) were added to carry out a second-stage polymerization, wherein styrene and butadiene were added simultaneously but at different respective addition rates, and a styrene microblock content was controlled by adjusting a ratio of the addition rates therebetween. After reaching a maximum temperature of the second stage, the reaction was further conducted for 15 minutes. Thereafter, 4.2 g of 4-{3-[dimethoxy(methyl)silyl]propyl}morpholine was added and the reaction was maintained at the same temperature for 20 minutes, and finally methanol was added to terminate the reaction.

The preparation methods of Examples 2 to 7 may be carried out with reference to Example 1, except that in Example 5, only 4.9 mmol of n-butyllithium was added and no diisopropenylbenzene was added, and the remaining differing conditions are as shown in Table 1.

Comparative Example 1: Into a 5525 g cyclohexane solution containing 8.3 g of a cyclic ether and 0.5 g of a diether compound, 4.9 mmol of n-butyllithium and 1 g of diisopropenylbenzene were added, followed by mixing and reaction at 50°C for 30 minutes. Thereafter, 1,3-butadiene and styrene (together in an amount of 65 wt% based on the total copolymer) were added to carry out a first-stage polymerization, wherein styrene and butadiene were added simultaneously but at different respective addition rates, and after reaching a maximum temperature of the first stage, the reaction was maintained at that temperature for 10 minutes. Next, the remaining butadiene (in an amount of 35 wt% based on the total copolymer) was added to carry out a second-stage polymerization, and after reaching a maximum temperature of the second stage, the reaction was further conducted for 15 minutes. Thereafter, 4.2 g of 4-{3-[dimethoxy(methyl)silyl]propyl} morpholine was added and the reaction was maintained at the same temperature for 20 minutes, and finally methanol was added to terminate the reaction. The difference between Comparative Example 1 and the Examples is that Comparative Example 1 first forms a copolymeric segment and then forms a homopolymeric segment, and the butadiene content of the homopolymeric segment is in an amount of 35 wt% based on the total copolymer.

The preparation method of Comparative Example 2 may be carried out with reference to Comparative Example

1, and the differing conditions are as shown in Table 1. The difference between Comparative Example 2 and the Examples is that Comparative Example 2 first forms a copolymeric segment and then forms a homopolymeric segment.

Comparative Example 3: Into a 5525 g cyclohexane solution containing 8.3 g of a cyclic ether and 0.5 g of a diether compound, 4.9 mmol of n-butyllithium was added, and 1,3-butadiene (in an amount of 65 wt% based on the total copolymer) was added to carry out a first-stage polymerization. After reaching a maximum temperature of the first stage, the reaction was maintained at that temperature for 10 minutes. Thereafter, the remaining butadiene and styrene (together in an amount of 35 wt% based on the total copolymer) were added to carry out a second-stage polymerization, wherein styrene and butadiene were added simultaneously but at different respective addition rates. After reaching a maximum temperature of the second stage, the reaction was further conducted for 15 minutes. Thereafter, 4.2 g of 4-{3-[dimethoxy(methyl)silyl]propyl}morpholine was added and the reaction was maintained at the same temperature for 20 minutes, and finally methanol was added to terminate the reaction. The main difference between Comparative Example 3 and the Examples is that Comparative Example 3 uses a lower addition rate of butadiene in the second-stage polymerization.

Comparative Example 4: Into a 5525 g cyclohexane solution containing 8.3 g of a cyclic ether and 0.5 g of a diether compound, 4.9 mmol of n-butyllithium and 1 g of diisopropenylbenzene were added, followed by mixing and reaction at 50°C for 30 minutes. Thereafter, 1,3-butadiene (in an amount of 65 wt% based on the total copolymer) was added to carry out a first-stage polymerization, and after reaching a maximum temperature of the first stage, the reaction was maintained at that temperature for 10 minutes. Next, the remaining butadiene and styrene (together in an amount of 35 wt% based on the total copolymer) were added to carry out a second-stage polymerization. In this step, styrene was added first, and butadiene was then started to be added 30 seconds later, so that a portion of the styrene first formed blocks, and the addition rates of styrene and butadiene were both 70 g/min. After reaching a maximum temperature of the second stage, the reaction was further conducted for 15 minutes. Thereafter, 4.2 g of 4-{3-[dimethoxy(methyl)silyl]propyl} morpholine was added and the reaction was maintained at the same temperature for 20 minutes, and finally methanol was added to terminate the reaction. The difference between Comparative Example 4 and the Examples is that, during the second-stage polymerization of butadiene and styrene, the two monomers were not added simultaneously; instead, styrene was added for a period of time before butadiene was added, and the addition rates of styrene and butadiene were the same.

Comparative Example 5: The preparation method of Comparative Example 5 may be carried out with reference to Comparative Example 4, except that, during the second-stage polymerization, styrene was added first and the addition of butadiene was started 1 minute later.

Table 1

| | Cyclic ether and diether | Multifunctional initiator | First Stage | Second Stage | | | | BD1/ (BD1+BD2+SM) |
|---|---|---|---|---|---|---|---|---|
| | | | BD1(g) | BD2(g) | SM(g) | BD2 rate | SM rate | |
| Ex. 1 | Y | Y | 585 | 176 | 139 | 12 g/min | 70 g/min | 65 wt% |
| Ex. 2 | Y | Y | 585 | 176 | 139 | 11 g/min | 70 g/min | 65 wt% |
| Ex. 3 | Y | Y | 585 | 176 | 139 | 13 g/min | 70 g/min | 65 wt% |
| Ex. 4 | Y | Y | 585 | 176 | 139 | 15 g/min | 70 g/min | 65 wt% |
| Ex. 5 | Y | N | 585 | 176 | 139 | 18 g/min | 70 g/min | 65 wt% |
| Ex. 6 | Y | Y | 630 | 131 | 139 | 13 g/min | 70 g/min | 70 wt% |
| Ex. 7 | Y | Y | 657 | 104 | 139 | 14 g/min | 70 g/min | 73 wt% |
| Comp. Ex. 3 | Y | N | 585 | 176 | 139 | 9 g/min | 70 g/min | 65wt% |
| Comp. Ex. 4 | Y | Y | 585 | 176 | 139 | SM was added first, and BD2 was added thereafter | | 65wt% |
| Comp. Ex. 5 | Y | Y | 585 | 176 | 139 | SM was added first, and BD2 was added thereafter* | | 65wt% |

| | Cyclic ether and diether | Multifunctional initiator | First Stage | | | | Second Stage | |
|---|---|---|---|---|---|---|---|---|
| | | | BD1(g) | SM(g) | BD1 rate | SM rate | BD2(g) | BD2/ (BD1+BD2+SM) |
| Comp. Ex. 1 | Y | Y | 446 | 139 | 11 g/min | 70 g/min | 315 | 35 wt% |

| Comp. Ex. 2 | Y | Y | 176 | 139 | 10 g/min | 70 g/min | 585 | 65 wt% |
|---|---|---|---|---|---|---|---|---|

Note: "Y" indicates used, and "N" indicates not used. *: An interval between the respective start points of charging SM and BD2 was longer than that in Comp. Ex. 4.

The copolymers obtained in the above Examples and Comparative Examples (collectively referred to as solution-polymerized styrene-butadiene rubber, SSBR) were compounded into rubber compositions according to the compounding formulation shown in Table 2, for conducting the measurements of the items shown in Tables 3 and 4. In preparing the compounding formulation of Table 2, an internal mixer was used to knead the respective components. During compounding of the masterbatch formulation, the rotor speed was controlled at 55 rpm and the temperature was controlled at 150°C, and during compounding of the final formulation, the rotor speed was controlled at 45 rpm and the temperature was controlled at 100°C.

Table 2

| Compounding recipe | | phr |
|---|---|---|
| MB recipe | SSBR | 70.0 |
| | Butadiene rubber (BR 0150) | 30.0 |
| | Silica | 70.0 |
| | TDAE oil | 37.5 |
| | Silane coupling agent | 11.2 |
| | Stearic acid (SA) | 2.0 |
| | Zinc oxide (ZnO) | 3.0 |
| | Antioxidant (AO) | 1.0 |
| F recipe | Sulfur powder | 1.5 |
| | Accelerator CBS | 1.8 |
| | Secondary accelerator DPG | 1.5 |
| Total Amount | | 229.5 |

Table 3

| | Ex. 1 | Ex. 2 | Ex. 3 | Ex. 4 | Ex. 5 | Ex. 6 | Ex. 7 |
|---|---|---|---|---|---|---|---|
| Bound Styrene content (B.S.%) | 15.8 | 15.4 | 15.8 | 15.5 | 15.8 | 14.6 | 14.9 |
| Vinyl content (Vinyl%) | 33.6 | 32.8 | 31.9 | 34.7 | 34.9 | 33.4 | 35.2 |
| Tg (Tanδ) | -52°C/ -25°C | -50°C/ -37°C | -52°C/ -35°C | -51°C/ -34°C | -51°C/ -35°C | -53°C/ -27°C | -55°C/ -13°C |
| Styrene micro-block content (S.B.%) | 2.9 | 3.1 | 2.1 | 4.7 | 7.2 | 1.0 | 2.3 |
| DIN | 100 | 103 | 105 | 100 | 100 | 110 | 101 |
| R.R. | 103 | 102 | 102 | 102 | 98 | 100 | 98 |
| W.G. | 149 | 122 | 130 | 130 | 146 | 111 | 167 |

The DIN, R.R., and W.G. values shown in Table 3 have been normalized and are relative values rather than absolute values.

Table 4

| | Comp. Ex. 1 | Comp. Ex. 2 | Comp. Ex. 3 | Comp. Ex. 4 | Comp. Ex. 5 |
|---|---|---|---|---|---|
| Bound Styrene content (B.S.%) | 15.8 | 15.8 | 15 | 15.3 | 15.5 |
| Vinyl content (Vinyl%) | 32.4 | 31.1 | 33.2 | 34.8 | 34.8 |
| Tg (Tanδ) | -42°C | -44°C | -53°C/ -31°C | -42°C | -44°C |
| Styrene microblock content (S.B.%) | 1.8 | 0 | 0.5 | 11 | 22 |
| DIN | 100 | 100 | 110 | 101 | 100 |
| R.R. | 100 | 100 | 100 | 92 | 81 |
| W.G. | 100 | 79 | 98 | 133 | 149 |

The DIN, R.R., and W.G. values shown in Table 4 have been normalized and are relative values rather than absolute values.

Comparative Example 1 first forms a copolymeric segment and then forms a homopolymeric segment, and the butadiene homopolymeric segment is present in an amount of only 35 wt% based on the total copolymer. As can be seen from the data in Tables 3 and 4, Comparative Example 1 exhibits a single-Tg phase, and its wet grip performance is inferior to that of the Examples exhibiting a dual-Tg phase.

Comparative Example 2 first forms a copolymeric segment and then forms a homopolymeric segment. As can be seen from the data in Tables 3 and 4, Comparative Example 2 not only exhibits a single-Tg phase, but also has a styrene microblock content of zero; therefore, its wet grip performance is significantly lower than that of the Examples (and is even worse than Comparative Example 1).

The copolymer of Comparative Example 2 is similar in overall structure to the copolymers of Examples 1 to 7, and the main difference lies in the polymerization sequence of the copolymeric segment and the homopolymeric segment. In Comparative Example 2, the copolymeric segment is formed in the first-stage polymerization. Since the reactor has not undergone any polymerization reaction, the reactor environment gradually increases from a relatively low temperature as polymerization is initiated during the first-stage polymerization. That is, the copolymeric segment of Comparative Example 2 starts polymerization under a relatively low-temperature environment, causing the distribution of styrene units in the chain to be more random, such that the proportion of styrene microblocks becomes nearly zero. This structural feature also affects its glass transition behavior, such that only a single glass transition temperature (Tg) is observed in viscoelastic rheological analysis. In contrast, in Examples 1 to 7, the copolymeric segment is formed in the second-stage polymerization. After the first-stage polymerization, the reactor is already at a high-temperature state; that is, the copolymeric segments of Examples 1 to 7 are polymerized under a relatively high-temperature environment, which is more favorable for the formation of styrene microblocks, thereby forming polymers having two glass transition temperatures (dual Tg).

Compared with the Examples, Comparative Example 3 uses a lower addition rate of butadiene in the second-stage polymerization. As can be seen from the data in Tables 3 and 4, although Comparative Example 3 exhibits a dual-Tg phase, it has a relatively low styrene microblock content, and therefore its wet grip performance is still inferior to that of the Examples.

In Comparative Examples 4 and 5, during formation of the copolymeric segment, styrene is added first and butadiene is added thereafter. As can be seen from the data in Tables 3 and 4, Comparative Examples 4 and 5 both exhibit a single-Tg phase and have excessively high styrene microblock content. Therefore, although they provide good wet grip performance, their rolling resistance is instead significantly reduced.

The data of Examples 1 to 7 show that the conjugated diene-vinyl aromatic hydrocarbon copolymer of the present invention, by virtue of having two glass transition temperatures (a first Tg of -10 to -50°C; and a second Tg of -45 to -85°C) and a specific structural design in which the styrene microblock content (S.B.%) is controlled to 1.0% to 10.0%, can significantly improve wet grip performance (W.G.). As shown for Examples 1 to 7 in Table 3, expressed as normalized relative values, the wet grip (W.G.) can reach as high as 167, which is clearly superior to copolymers having only a single Tg (e.g., Comparative Example 2). Meanwhile, the present invention can maintain rolling resistance (R.R.) at a level of relative values of 98 to 103, thereby avoiding a significant decrease in the relative value of rolling resistance to 81 due to an excessively high styrene microblock content (e.g., 22% in Comparative Example 5). In addition, the DIN abrasion index of the present invention can also be maintained stably at about relative values of 100 to 110.

## Claims

1. A copolymer of a conjugated diene and a vinyl aromatic hydrocarbon, comprising a homopolymeric segment composed of the conjugated diene and a copolymeric segment composed of the conjugated diene and the vinyl aromatic hydrocarbon, the copolymeric segment being connected to the homopolymeric segment, wherein the copolymer has a first glass transition temperature between -10°C and -50°C and a second glass transition temperature between -45°C and -85°C, the first glass transition temperature being higher than the second glass transition temperature, and a vinyl aromatic hydrocarbon microblock content of the copolymer in an amount of 1.0% to 10.0% based on a total vinyl aromatic hydrocarbon content of the copolymer, wherein the vinyl aromatic hydrocarbon microblocks refer to those having at least four consecutive vinyl aromatic hydrocarbon units.

2. The copolymer according to claim 1, wherein a conjugated diene content of the homopolymeric segment is in an amount of 60 wt% to 90 wt% based on a total content of the copolymer.

3. The copolymer according to claim 2, wherein a conjugated diene content of the homopolymeric segment is in an amount of 65 wt% to 73 wt% based on a total content of the copolymer.

4. The copolymer according to any one of claims 1 to 3, wherein the vinyl aromatic hydrocarbon is styrene and the conjugated diene is 1,3-butadiene.

5. The copolymer according to any one of claims 1 to 4, wherein the copolymer has a bound vinyl aromatic hydrocarbon content in a range of 10 wt% to 20 wt%.

6. The copolymer according to any one of claims 1 to 5, wherein a vinyl content of the copolymer is in an amount of 30 wt% to 40 wt% based on a total conjugated diene content of the copolymer.

7. The copolymer according to any one of claims 1 to 6, wherein the copolymer has no other glass transition temperature.

8. The copolymer according to any one of claims 1 to 7, further comprising a modified terminal connected to the copolymeric segment, wherein the copolymeric segment is located between the homopolymeric segment and the modified terminal.

9. The copolymer according to claim 8, wherein the modified terminal contains silicon.

10. A method for producing the copolymer according to any one of claims 1 to 9, comprising: step (1) providing an initiator; step (2) under conditions in the presence of a cyclic ether compound and a diether compound, polymerizing by an anionic polymerization using the initiator to form the homopolymeric segment composed of the conjugated diene; and step (3) after step (2), forming the copolymeric segment composed of the conjugated diene and the vinyl aromatic hydrocarbon to connect to the homopolymeric segment, wherein in step (3), the vinyl aromatic hydrocarbon and the conjugated diene are simultaneously added to a polymerization reactor, and an addition rate of the vinyl aromatic hydrocarbon is different from an addition rate of the conjugated diene.

11. The method according to claim 10, wherein the initiator is a multifunctional initiator produced by reacting a divinylarene compound with an organoalkali metal.

12. The method according to claim 10 or 11, wherein the cyclic ether compound and the diether compound are tetrahydrofuran and ethylene glycol diethyl ether, respectively.

13. The method according to any one of claims 10 to 12, wherein in step (3), a ratio of the addition rate of the vinyl aromatic hydrocarbon to the addition rate of the conjugated diene is 3.8 to 6.4.

14. The method according to any one of claims 10 to 13, further comprising: step (4) after step (3), forming a modified terminal connected to the copolymeric segment, wherein the copolymeric segment is located between the homopolymeric segment and the modified terminal.

# EUROPEAN SEARCH REPORT

Application Number
EP 26 15 8639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 466 995 A1 (TSRC CORP [TW]) 10 April 2019 (2019-04-10) * claims; examples * ----- | 1-14 | INV. C08F297/04 C08F236/10 |
| A | US 2023/183396 A1 (CHEN CHUN-LIN [TW] ET AL) 15 June 2023 (2023-06-15) * claims; examples * ----- | 1-14 | ADD. B60C1/00 C08L9/06 C08L53/02 C08C19/25 |
| A,D | EP 2 787 037 A1 (JSR CORP [JP]) 8 October 2014 (2014-10-08) * examples; table 1 * ----- | 1-14 | |
| A | CN 111 072 878 A (CHINA PETROLEUM & CHEM CORP ET AL.) 28 April 2020 (2020-04-28) * claims; examples * ----- | 1-14 | |
| A | CN 111 072 880 A (CHINA PETROLEUM & CHEM CORP ET AL.) 28 April 2020 (2020-04-28) * claims; examples * ----- | 1-14 | |

TECHNICAL FIELDS SEARCHED (IPC)

C08F
C08L
B60C

The present search report has been drawn up for all claims

1

| Place of search | Date of completion of the search | Examiner |
|---|---|---|
| Munich | 12 June 2026 | Friebe, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 26 15 8639

This annex lists the patent family members relating to the patent documents cited in the above-mentioned European search report. The members are as contained in the European Patent Office EDP file on
The European Patent Office is in no way liable for these particulars which are merely given for the purpose of information.

12-06-2026

| Patent document cited in search report | Publication date | Patent family member(s) | Publication date |
|---|---|---|---|
| EP 3466995 A1 | 10-04-2019 | CN 109627382 A | 16-04-2019 |
| | | EP 3466995 A1 | 10-04-2019 |
| | | JP 6879986 B2 | 02-06-2021 |
| | | JP 2019073682 A | 16-05-2019 |
| | | KR 20190039875 A | 16-04-2019 |
| | | PT 3466995 T | 23-12-2020 |
| | | TW 201915038 A | 16-04-2019 |
| | | TW 202021999 A | 16-06-2020 |
| | | US 2019106523 A1 | 11-04-2019 |
| US 2023183396 A1 | 15-06-2023 | CN 116253835 A | 13-06-2023 |
| | | EP 4194226 A1 | 14-06-2023 |
| | | JP 2023088874 A | 27-06-2023 |
| | | JP 2025098254 A | 01-07-2025 |
| | | KR 20230088294 A | 19-06-2023 |
| | | TW 202337931 A | 01-10-2023 |
| | | US 2023183396 A1 | 15-06-2023 |
| EP 2787037 A1 | 08-10-2014 | CN 103958600 A | 30-07-2014 |
| | | EP 2787037 A1 | 08-10-2014 |
| | | JP 5920359 B2 | 18-05-2016 |
| | | JP WO2013081053 A1 | 27-04-2015 |
| | | KR 20140098080 A | 07-08-2014 |
| | | SG 11201402767Y A | 26-09-2014 |
| | | US 2014357759 A1 | 04-12-2014 |
| | | WO 2013081053 A1 | 06-06-2013 |
| CN 111072878 A | 28-04-2020 | NONE | |
| CN 111072880 A | 28-04-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4843120 A
- JP 2008231197 A
- CN 103958600 B
- CN 103476815 B